# EUROPEAN PATENT SPECIFICATION

(11) **EP 2 024 077 B1**
(45) Date of publication and mention of the grant of the patent: **30.03.2011**
(21) Application number: 06745298.7
(22) Date of filing: 21.04.2006
(51) Int. Cl.: B01J 19/00, F17C 11/00, C10L 3/08

(54) **APPARATUS FOR PREPARING AND STUDYING CLATHRATE HYDRATE**
VORRICHTUNG ZUR HERSTELLUNG UND UNTERSUCHUNG VON CLATHRATHYDRAT
APPAREIL PERMETTANT DE PRÉPARER ET D'ÉTUDIER UN HYDRATE DE CLATHRATE

(43) Date of publication of application: 18.02.2009
(73) Proprietor: Centro di Eccellenza Sui MateriaIi Innovativi Nanostrutturali (CEMIN), 60123 Perugia (IT)
(72) Inventor: ARCA, Simone, I-05100 Terni (IT); DI PROFIO, Pietro, I-06127 Perugia (IT); GERMANI, Raimondo, I-06087 Ponte San Giovanni (IT); SAVELLI, Gianfranco, I-06125 Perugia (IT)
(74) Representative: Gislon, Gabriele
(86) International application number: PCT/IT2006/000274
(87) International publication number: WO 2007/122647

(56) References cited:
- WO-A-98/27033
- US-B1- 6 389 820
- US-B1- 6 653 516
- US-B1- 6 787 112

## Description

### Field of the invention

The present invention is related to an apparatus for preparing and studying clathrate hydrates of gases.

More particularly, the invention relates to an apparatus for preparing clathrate hydrates of gases in controllable and reproducible conditions and for studying the same due to a precise determination of critical parameters, that is preparation parameters such as e.g. induction time, formation time, occupancy rate etc., in a reproducible manner.

### Background of the invention

Clathrate hydrates are self-assembled supramolecular nanostructures composed by a three-dimensional network, namely a solid which may be described as "ice" formed from water molecules joined by hydrogen bonds. The structure of water molecules is provided with a plurality of cavities wherein gaseous molecules are trapped, so as to obtain a mixed structure made of gas and water that gives it the common name of gas hydrates.

Clathrate hydrates may represent an excellent solution to gas storage and transportation, especially for gaseous fuels such as hydrocarbons and hydrogen, because they show a number of advantages compared with traditional storage and transportation technologies, such as e.g. compressed gas-based technologies. Indeed, in one volume unit of clathrate can be stored up to 160 standard volumes of methane and ca. 350 standard volumes of hydrogen and, moreover, the transportation of gas is effected in a highly safe manner because the stored gas is released only by thawing the ice solid structure, i.e. in a progressive manner, with clear advantages compared to known compressed tanks.

On the other hand, clathrate hydrate are a problem in the field of oil industry: their formation within gas pipelines across cold regions or in subsea gas pipelines represent a serious problem still to be solved. Moreover, the natural occurrence of clathrate hydrates, the natural gas hydrates, represent an unconventional energy source of methane with an abundance which amounts to more than 50% of fossil carbon of the earth, more than twice the fossil fuels extracted up to now in terms of carbon equivalents. Finally they represent an interesting strategy in the field of CO₂ mitigation because carbon dioxide can be stored in sub-sea deposits of CO₂ clathrate hydrates on a wide scale.

Clathrate hydrates have been studied to understand the kinetics and thermodynamics of their formation and dissociation; in particular the conditions of formation of clathrate hydrates in presence of several kinds of "conditioners", particularly amphiphilic molecules such as surfactants and the conditions of stability of clathrate hydrates in presence of several kinds of sea sediments have been actively investigated, in order to obtain a better characterization of these systems and, therefore, a better development of technologies based on clathrate hydrates for a wide commercial exploitation. For example in US B-6,389,820 a method to prepare clathrate hydrates in presence of sodium dodecylsulfate (SDS), as a conditioner, is described.

The apparatus comprises a reactor that is provided with viewing means to study the reaction of formation of the hydrates. A mixture of water and surfactants is fed from a (not shown) reservoir into the reactor to fill it completely, then gas is pumped into the reactor to partially displace the liquid and the mixture is refrigerated by means of a coil immersed in the liquid. Hydrates form along the walls of the reactor.

US 6787112 refers to an apparatus and a method for controlling several reactions carried out at the same time. To this purpose, the apparatus comprises several reactors, stirring means, temperature and pressure control means, liquid feeding pumps. Pressure regulating means allow the pressure to decline down to a set value; when said lower value is reached, a valve is opened and more gas is fed to the reactor. There is no mention of clathrate hydrates nor of their production in this document.

US 6653516 discloses an apparatus for producing hydrates by spraying water containing stabilizers and methane dissolved therein in a reactor containing a methane atmosphere. The hydrates produced form a layer of supernatant crystals on the water phase in the reactor; methane is fed as bubbles from the bottom of the reactor, through the water phase.The non reacted supercooled water is drawn from the bottom of the reactor and fed again to the reactor from the top.

However, to date, the results of the studies which have been conducted seem to indicate that the formation of clathrate hydrates, especially for its kinetic aspects, occurs in a non-reproducible and stochastic way. This determines a lack of homogeneity in the data obtained by a given research team with a given apparatus, that induces a lack of comparability of said data with consequent difficulty in an exact characterization. This gives rise to several problems on the application of such preparations. For example, the fact that a gas hydrate decomposes faster than predictable involves great problems for its transportation. It has been attempted therefore to develop methods to solve such problems: in EP 0835406 it is described a method for the transportation of gas hydrates avoiding their decomposition which implies the preparation of gas hydrate, its milling and mixing with oil in order to obtain a slurry which can be pumped.

On the other hand, it is known in the art the use of a wide variety of apparatus for the preparation of clathrate hydrates: in some cases custom made apparatuses are used to determine a particular parameter, in other cases, instead, classical known apparatuses are used as e.g. flow loops, rocking cells or autoclaves. Generally the reactor is made from an high pressure rotatable cylinder that contains steel balls to assure the agitation of the reaction mixture; such cylinder is provided with a sapphire window to allow viewing inside the pressurized cylinder. In order to allow a control and pressure regulation of gas supplied to the cylinder, a gaseous fluid metering pump is generally used that can assure precision and accuracy in high pressure and low flow working conditions; the same applies for liquid fluid supply to the reaction chamber. An analogic camera films the inside of the reaction chamber through the sapphire window and records on a VHS media, what happens during the reaction. The inside of the cylinder is lighted from the outside generally with 100W halogen lamps, the pressure is read by a digital gauge connected to a PC, the entire cylinder is dipped into a cooling bath controlled by a digital cryostatic system connected to a PC.

Such an apparatus as described above allows the study of hydrate formation, but has some problems. First of all the controls on the parameters are passive and not active; substantially the reaction conditions are preset and are not measured while the reaction is carried out, with considerable limitation of measuring capability of the apparatus. Last but not least, the realization of a similar apparatus is definitely expensive. Therefore a need arises to be able to form clathrate hydrates, and studying the same, in a reproducible and reliable manner with a reduced cost.

The object of the present invention is to solve this problem by providing an apparatus for the formation of clathrate hydrates that can lower the stochastic character in the preparation of the same.

This object is attained by the present invention, that concerns an apparatus for clathrate hydrate preparation, according to claim 1.

Indeed, it was found, and this finding is the base of the present invention, that the main problem solved by the invention, that is the reason of such variability of results obtained, is mostly due to the differences among the experimental apparatuses, and to a lack of control of all the involved parameters.

The apparatus according to the present invention allows to monitor important parameters such as temperature, pressure, conductivity and fluid flow rate, at the same time and during the reaction, by detecting their trends with time: in this way the problems of known art are avoided. In particular, this apparatus is able to modify the concentration of a conditioning additive during clathrate hydrate synthesis, measuring it under formation conditions, with the various techniques known in the art, such as the conductimetric one, without affecting T and P as formation parameters. In other words, the apparatus according to the present invention measures in a single synthesis process as many characterization parameters as possible, in the most accurate manner in order to generate a homogeneous and comparable data set.

Besides the use for the formation and study of clathrate hydrates, the apparatus according to the present invention can be used advantageously in the study of processes in which gases are evolved or consumed, or for studies of all those aggregation processes on macro, micro and nano scale without departing from the scope of the present invention.

The invention will be now described in more detail, by reference to the drawings which are included as an illustration and not limitation, wherein:
- Figure 1 is an outline of the apparatus according to the invention;
- Figure 2 is an enlarged schematic view of a measuring probe according to the present invention;

- Figure 3 is an enlarged schematic cross-section view of the connections of some of the control and measuring means according to the invention;
- Figure 4 is a cross-sectional view of the reactor cover of figure 1, showing the arrangement of the viewing window of the inside of the reactor;
- Figure 5 and Figure 6 are two diagrams that show data recording during clathrate hydrate formation according to the invention and the prior art, respectively;
- Figure 7 and Figure 8 are diagrams of recordable data in the determination of critical phenomena under constant P with the apparatus of the invention and according to the prior art, respectively; and
- Figure 9 is a diagram that combines the CMC determination of a surfactant and the formation conditions of methane hydrate in the apparatus of the invention.

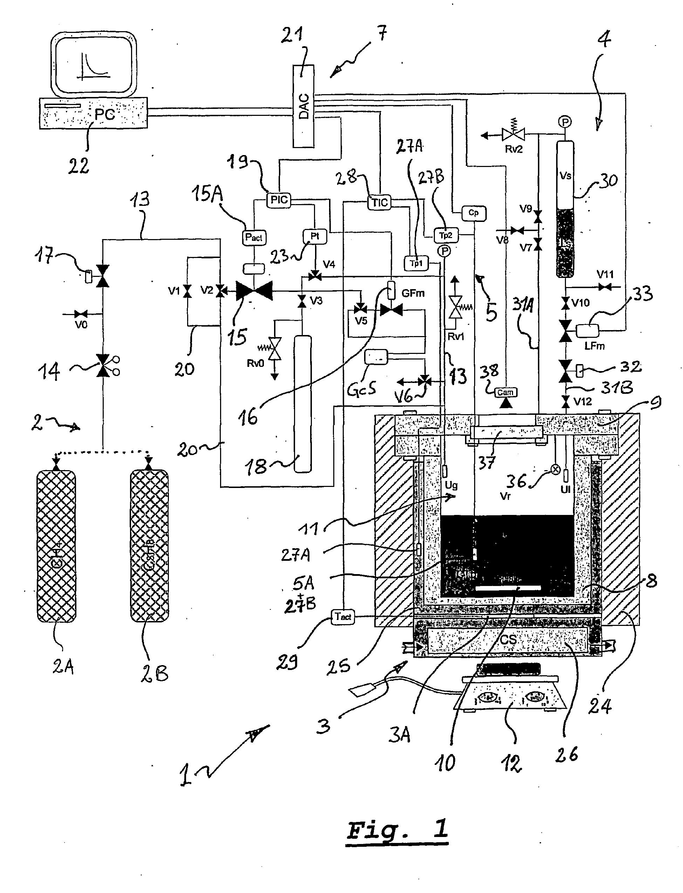

With reference to figure 1, first, the apparatus according to the invention comprises a reactor 1, means of gas loading and pressure control 2, means of temperature regulation and control 3, means of liquid supply 4 at constant pressure, means for conductimetric detection 5, means of visual monitoring 6, means of data acquisition and control 7.

The reactor or reaction chamber 1 is comprised of a cylinder 8 with stainless steel flange-coupled cover 9: all inlets, outlets and the probes needed to implement the above-mentioned means 2-7 are arranged on the cover. This results in a simpler construction of the cylinder that can be made from a single piece to allow a higher safety given by the absence of weldings and which is completely interchangeable with other cylinders of different dimensions and materials, for a fixed diameter of cover 9.

Preferably cylinder and cover are made from stainless steel AISI 321TP that, as compared to other steels, is more passivated and shows a more progressive permanent set, so as to minimize damages in case of pressure burst. Moreover the reactor's steel surface is teflonized in order to avoid the adhesion of hydrate to the steel surface and the rise of the same along the reactor walls. The cylinder 8 is static and stirring is carried out by means of a magnetic stirring bar 10 placed inside the reaction chamber 11 and operated by a magnetic stirrer 12 placed below the cylinder; as an alternative, a mechanic or sonication stirring or any other kind of stirring for pressurized apparatus known in the art are usable in the apparatus. This simple solution avoids the need of a rocking cylinder or the use of complex and sensitive rotary seals, with remarkable cost savings.

The means 2 of gas loading and pressure control involve a loading line 13 extending from at least one pressurized gas source (in the embodiment two tanks 2A and 2B of methane and propane are shown respectively) through the pressure regulator 14, the electropneumatic active valve 15, a thermomassic flow meter 16 and a final valve V6. The pressure inside the chamber is guaranteed by its connection to the pressurized gas tank and regulated through the pressure regulator 14. The valve 15 has the function to compensate the mechanical hysteresis of pressure regulator 14 on restoring low pressure drops due to gas absorption inside the reactor during the hydrate formation process (or any other kinds of processes). The valve 15 is actuated by the actuator 15A that is driven by digital process controller 19.

The apparatuses 15 and 15A are commercially available from Kammer Ventile group FlowServe as electropneumatic valve for ultrafine gas regulation, Mod. 0800-P0-47.

For non-liquefiable gases at room temperature, such as methane, the working pressure can be modulated through the pressure regulator 14, from 0 (vacuum) to the gas tank pressure, while for supercritical gases such as ethane and propane, it is equally possible to modulate the pressure from 0 (vacuum) to the gas vapor tension, or working directly under the vapor tension bypassing the pressure regulator 14 through direct connection on V0. The inlet gas flow rate is measured through a termomassic flow meter for gaseous fluids, 16: this instrument has preferably such a sensitivity as to measure even very little flow rates as low as tenths or hundredths of Nml/min, with precision down to the second decimal point. An example of a proper meter is that commercially available form Bronkhorst Hi Tec with the trade name EL/FLOW series, model F131 M AGB 33V. The flow meter 16 measures the inlet gas, in the event of synthesis, or the outlet gas in the event of clathrate dissociation; during the steps of pressure loading and pressure holding the valves V2-V4 e V6 are switched in loading position and vice versa during discharge or dissociation. The PIC 19 (such as, e.g., that available from Eurotherm, model 2604, 2000 series) is able to drive the valve 15 to operate the pressure control based on the only pressure signal received from 23 or operate a flow control based on the only signal received from 16, or operating a pressure variation by activating a double PID loop control system in cascade mode that allows to reach a pressure set point by running a pressure ramp derived from an established gas flow, which is constant or variable with time, this concomitantly based on the signals received from 16 and 23. The valve V5, which is positioned upstream of the flow meter has the function, according to the need, to bypass the meter 15 when the flow measurement is not required. This gas inlet line can be multiplied in order to allow the use of different gases at the same time.

Upstream the electropneumatic valve 15 there is provided a three-way ball valve V2 that, together with valve V1 and line 20 allows the exclusion of both valve 15 and meter 16 to operate fast charge and discharge with the only regulation provided by a manual metering valve 17. In this configuration the valve V1 is turned open and V2 closed, while valve V1 is usually closed.

The combination of the instruments pressure meter 23 and gas flow meter 16, together with valve 15 and the relevant control system, replaces a gas metering pump with considerable impact on the construction costs. Moreover, it allows to measure the flow rate avoiding to set it preliminarly, thus allowing to follow the hydrate formation reaction in a more precise and exhaustive manner.

As shown in figure 1 a gas plenum chamber 18 is preferably present which is fitted to the terminal portion of line 13 by the valves V3 and V4; the opening of the V3 valve during loading phase allows to fill the gas plenum chamber 18 that will Subsequently compensate low gas absorptions that cannot be immediately restored by valve 15 due to its inherent hysteresis. The valve V4 allows the pressure transducer 23 to detect the pressure of the reactor both in the charging step, where the V6 inputs gas into the reactor, and in the discharging step, where the V6 discharges to the environment, and to send said signal to the process controller 19 and to the Analog Digital Converter (ADC) 21. A suitable apparatus 21 is a 4 channel Analog Digital Converter series D5000 available from DGH Corporation.

The temperature control means 3 preferably include a Peltier element 3A connected on one face with a copper block 25 that constitutes the element cooled or warmed by the Peltier, and, on the other face, with a heat exchanger 26 to which it releases or takes the exchanged heat. Insulating media 24 insulate the copper block 25 from the environment. The heat exchanger 26 is preferably a water heat exchanger that, connected to a water tap, allows to obtain an exchange temperature substantially constant of 15 °C.

Exchanger 26 can be connected to another cooling system with the proper power in order to lower the exchanger temperature and obtain a lower temperature inside the reactor.

The temperature of block 25 and inside the reactor is detected by two probes 27A and 27B that transmit the signal to the process controller 28 which sends its own signal to the converter 21 and to the actuator 29 connected to the Peltier 3A, according to the temperature to be reached or maintained. Appropriate probes are e.g. process signal transducers based on 4-20mA standard available from Scientific Glass.

A similar cooling and heating system (not shown) is used for the inlet gas; in this case the Peltier heat exchanger is a fan dissipator. A proper temperature probe not shown in the drawing detects the temperature of the gas overlaying the liquid or solid phase inside the reactor.

The liquid inlet inside the reaction chamber, is carried out through means 4 that work based on the principle of communicating vessels. In particular the means 4 involves a reservoir 30 mounted at a higher level than the reactor and that is connected to it, i.e. in connection with the reaction chamber of reactor 1. As can be seen, the reservoir 30 contains a volume of reaction liquid (water plus possible additives) at the bottom and a volume of gas at the top.

The reactor and the reservoir are connected to the same closed loop that connects the top portion of the reservoir to the reactor with the line 31A and the bottom portion of the reservoir, which is to say the portion of the reservoir where the reaction liquid is contained, to the reactor with the line 31B. On line 31B are provided, in a series towards the reactor, a valve V10, a liquid flow meter 33 connected to the converter 21, a regulation valve 32 and a valve V12. Between reservoir 30 and valve V10 a branch of circuit provided with a valve V11 and connectable with a source of the reaction liquid, is extending.

On line 31A are arranged, successively, a valve V9, a valve V8 connectable to a reduced pressure source and a valve V7. '

To supply liquids maintaining a constant system pressure, the reaction liquid is charged in the reservoir 30, after evacuating it with a vacuum pump through valve V8, with valve V7 and V9 closed. Suction of the reaction liquid occurs through the branch of line 31B, where valve V11 is fitted. Then valve V7 and V9 are opened, thus communicating the top section of the reservoir with the reactor where the gas is already charged as described above: in this manner the pressure of reservoir 30 is equal to the pressure in the reactor 1. The liquid is transferred from reservoir 30 to the reactor 1 by opening the valves V10, 32, V12 and dropwise feeding from reservoir 30.

The valve 32 adjusts the flow rate and the liquid flow meter 33 measures its value and sends the relevant signals to the converter 21 and the PC 22. The micrometric valve 32 can be replaced by a electropneumatic or solenoid valve controlled by a process controller that receives the signal of flow from 33, i.e. activating a control loop similarly as that for pressure. This further implementation allows to modify the concentration in a variable way with time or add certain amounts of solution under constant pressure during clathrate hydrate synthesis or dissociation. Obviously this addition line of liquid can also be multiplied in order to supply different liquids simultaneously.

This simple and elegant strategy affords a liquid injection inside the reactor in a manner which is independent from the working pressure; indeed, being both containers 1 and 30 connected to a closed hydraulic loop (lines 31A and 31B), their pressure will be the same as set by the pressure regulator, independently from the state (open or closed) of valve 32. In this manner, the liquid that will drop into the reactor will be pushed only by the ΔP due to the different height level between the two containers, being therefore almost constant and independent from the working pressure and its possible changes during clathrate hydrate synthesis.

This solution allows to overcome the problems that occur in the prior art where metering pumps are used. In fact, in event of the liquid injection being actuated by a metering pump, for each ml of liquid injected to the reactor, the volume of gas that overlays the liquid will decrease of one ml, Vr-1: this would determine an increase of the pressure inside the reactor or a gas backflow towards the pressure regulator 14, thus unfavourably affecting the measurement of flow meter 16 because the reaction would proceed with a variable volume Vr and consequent pressure variation.

The gas supply solution according to the invention overcomes this problem of the prior art because the volume of the overall gas that overlays the liquid is given by a sum of that inside the reactor plus that inside the solution reservoir, Vr + Vs. For each ml released, Vr-1 will be obtained as gas volume inside the reactor, while the gas volume inside the reservoir will be Vs+1, their sum does not change and the gas overlaying the liquid, will be therefore constant during the reaction, not affecting the reaction conditions, and moreover being measurable.

Preferably, the metering valve 32 is a needle valve controlled by a micrometric screw with high linearity between number of turns and flow delivered, even at the lowest flows, as for example fractions of ml/min. It will then be possible to set an inlet flow of liquid which is constant during the course of the reaction. Moreover the liquid can be dropped from above, nebulized or directly injected on the bottom of the reactor, using a proper injection nozzle.

This liquid supply solution in the reaction chamber avoids the use of an expensive and fragile metering pump for high pressure fluids with elevated precision, and the relevant maintenance costs, and moreover, as demonstrated above, allows for a better efficiency of liquid metering. It must be noted moreover that the strategy of solution supply adopted in the apparatus according to the invention allows that both in the reactor and the reservoir the solutions are saturated with the experimental gas before the beginning of the experiment: this allows to determine directly the net absorption of gas due to clathrate hydrate formation, and most importantly, it avoids the presence of other dissolved gases in solution, which is not avoidable in the case of using a metering pump.

Moreover, means 5 to measure the concentration of possible solutes present in water are disposed within the reactor, under pressure. In fact, the concentration can be changed using a concentrated solution in the reservoir and a less concentrated solution in the reactor, in order to be able to increase the concentration of the reaction liquid through liquid introduction form reservoir 30 to reactor 1. The measurement of the effective concentration can be obtained in several ways already known in the art: for example it can be carried out by measuring the spectroscopic properties as UV-Vis, IR, Raman or the electrochemical properties such as conductivity, potentiometry and pH, or measuring colligative properties such as for example vapor tension measurable as relative humidity (RH%) of the gas that overlies the liquid.

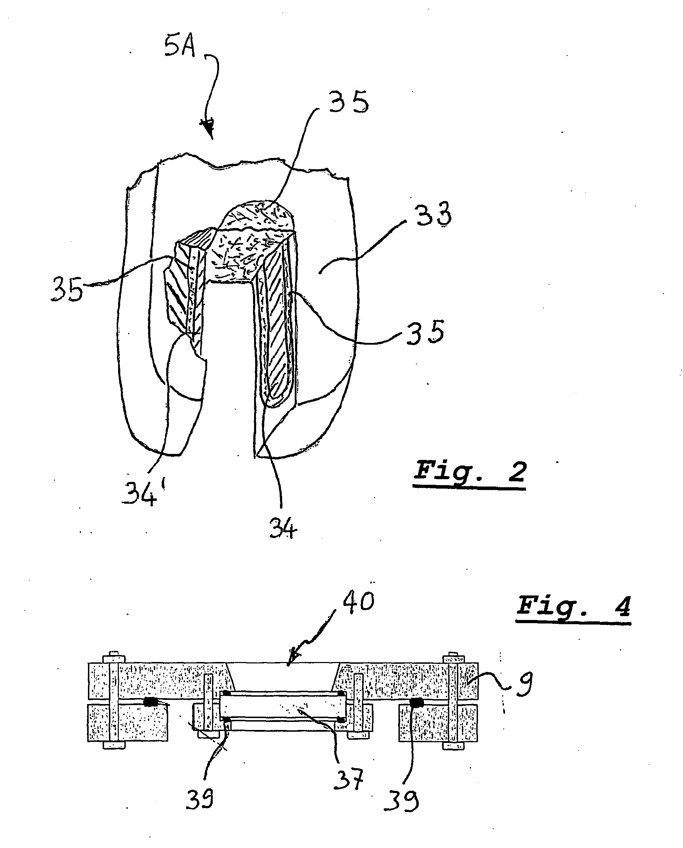

The preferred embodiment of the invention is designed to measure the concentration by conductometry, with the probe 5A, schematically shown in figure 2. Such a probe includes a protective jacket made from stainless steel 33 that presents two opposed housings in which electrodes 34 and 34' are contained, generally made from gold or platinum. The electrodes 34 and 34' are fixed to the jacket by means of resin 35 which is able to withstand the clathrate hydrate preparation conditions. Particularly, the resin 35 must have the following properties:
- High mechanical strength against consecutive pressure load and discharge cycles
- very low pressure compressibility factor and temperature deformation factor in order to avoid deformation of probe geometry that will affect the cell constant with variation of T or P;
- High adhesivity on highly passivated surfaces as stainless steel, gold or platinum.
- low and temperature-invariant dielectric constant;
- high resistance to aggressive chemicals;
- high fluidity in the preparation stage to be easily casted in small-sized dies.

A preferable resin is that obtained by reacting the epoxy 4,4'-methylenebis(N,N-diglycidylaniline) with 1,3-phenylenediamine, and methylenedianiline (MDA). To improve the adhesion of the resin to the surface of steel jacket the latter is treated by an etching process with hydrogen peroxide / Hcl, or aqua regia, in order to make porous the surfaces with which the resin comes into contact. Alternatively to the stainless steel treated as above, materials already porous, such as e.g. sintered metals, can be used.

To further improve the adhesion of resin, a priming treatment of the surface with adhesion promoters as organosilanes or electroplating treatment of copper, copper oxide, aluminium or alumina, with which the resin shows a better adhesion, can also be carried out.

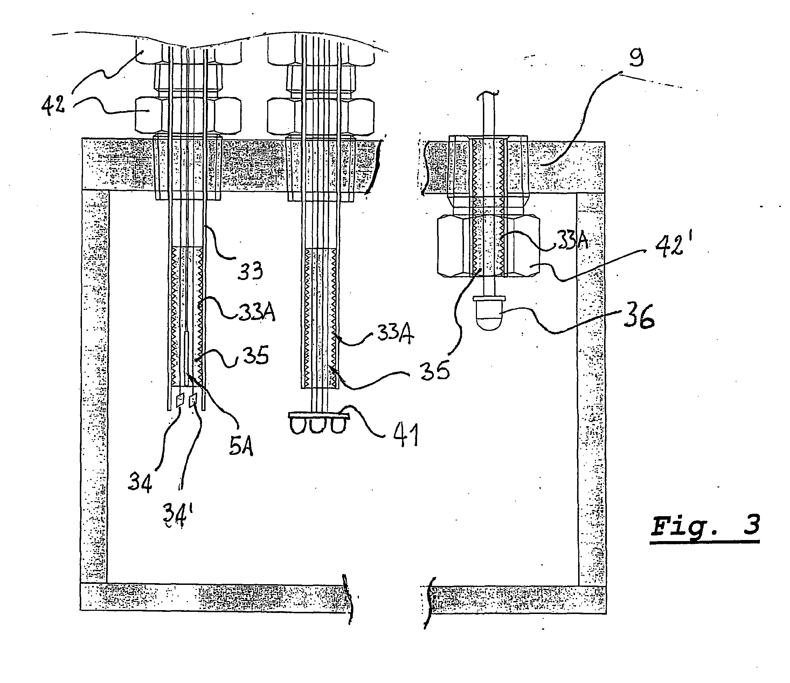

The thus-prepared probe is able to withstand 200 bar at 100°C and also aggressive chemicals such as dichloromethane, tetrahydrofuran, and other organic solvents or strong acids and bases. This probe shows also a cell constant which is invariant in a wide range of measuring frequencies from 1kHz up to 1000kHz. Figure 3 shows the engagement of the probe on cover 9 of the reactor. The jacket 33 presents an internal thread that enhances the grip of the resin 35 wherein the electrical wirings of the electrodes 34 and 34' are dipped. In the embodiment of figure 3 the same resin and the same sealing system were used for the other measurement and/or data acquisition means shown, as for example the electric wiring to the LEDs, disposed internally to the reaction chamber.

LED 36 is a part of the novel image acquisition system within the reactor that involves, besides the LED 36, also a clear viewing window 37, and a camera 38. Figure 4 shows the arrangement of the viewing window on the cover of the reactor. The viewing window, made from sapphire or plexyglass, is flange-coupled to the cover 9 corresponding to the hole 40. O-rings or planar gaskets ensure the sealing.

The LED cluster 36 is a cluster of LED diodes, having white, IR and UV wavelengths of emission, that do not have cavities that can collapse under pressure, as would occur with a usual filament lamp, and that emit a cold light that does not disturb the temperature control of the system. Besides the noted LEDs, other proper internal light sources are blue, green or red LEDs, to be used in alternative or together with the previous ones to highlight particular details inside the reactor. The camera is connected to a PC video acquisition card in a way which is known in the art.

All signals are transmitted in analog mode on 4-20mA communication standard in order to avoid the disturbance due to unwanted signals due to voltage drop along the wiring. These analog signals are acquired by the analog digital converter 21 that digitizes and send the same to the PC 22. The preferential communication protocol is the RS232C. The converter 21 can be read at given intervals (5 times per second up to 1 time per our) depending on the duration of the experiments.

Moreover, the user may store and set two levels of alarming, lower and higher for each signal.

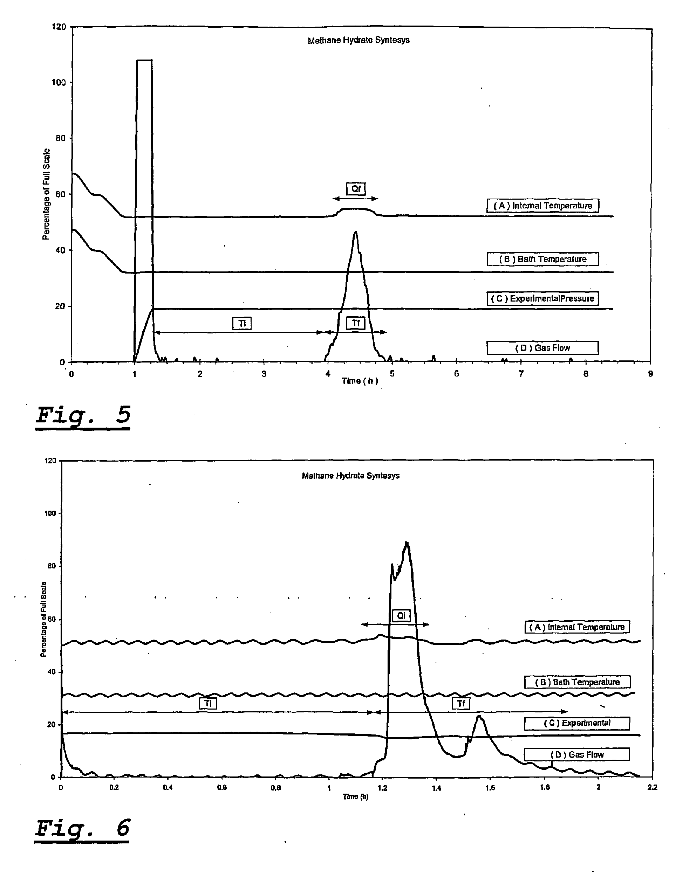

The invention will be now described more in detail with reference to the following examples and the plots of figures 5-9.

### Example 1

Synthesis of methane clathrate hydrate with control of operating parameters in accordance with the present invention.

The reactor 1 was charged with 100 ml of ultrapure water (obtained by Millipore Simplicity 185 ion-exchanger) and the flange 9 fastened. The liquid was stirred at 250 rpm by the magnetic stirring bar 10 rotated by the magnetic stirrer 12. The content of the reactor was subsequently thermostatted at 2°C by the Peltier cooling system 3A controlled at said temperature by means of digital process controller 29, converter 21, and actuator 29. The temperature profile of the reactor content and the thermostatting block 25 are respectively indicated by the curves (A) and (B) in figure 5. The reactor was then pressurized with methane gas from the pressurized tank through line 2, methane having with G20 purity grade purchased from Air Liquide Italy. The methane pressure inside the reactor was monitored by means of pressure transducer 23, and regulated to 40 bar, setting said value as a set point of the digital process controller 19 that controls the electropneumatic valve 15 by means of the actuator 15A. The pressure profile and its reaching of the set point value (40 bar) is shown by curve (C) in figure 5. At this point, the system is under methane hydrate formation conditions (40 bar, 2°C), and a latency period or induction time begins, which is defined as the time elapsed from reaching the hydrate formation condition region up to the formation of the first crystals of clathrate hydrate. Such an induction time is indicated by the range Ti in Figure 5. After elapsing of the induction time, the formation of the first methane hydrate crystals is detected by: (1) an inlet methane gas flow as measured by the gas flow meter 16, as indicated by Tf in Figure 5, and a slight increase of the internal temperature of the reactor, which reflects the releasing of heat of formation of methane hydrate indicated as Qf in Figure 5. Formation time Tf corresponds to the time span in which the gas flow meter 16 detects a non-zero flow of methane. During methane hydrate formation as characterized by Tf, the liquid inside the reactor gradually turns into a translucent slurry and ultimately a solid matter similar in appearance to snow or ice, as seen through the camera 38. During the time Tf, the magnetic stirring stops because of the solidification of the liquid.

In the present example, the following two items are worth noting: 1) the oscillation of the operating parameters (P, T, gas flow) during the experiment are negligible, as they fall within a range of ±0.2% of FS; 2) the curve of flow shows a single absorption peak, indicating methane hydrate formation.

### Example 2 (comparative)

Synthesis of methane hydrate with control of operating parameters in accordance with the prior art.

The experiment was carried out as in example 1, but for the control of operating parameters, that was carried out by using control procedures of the prior art. In particular, the PID control loops for pressure, temperature and flow were not active, the pressure control is carried out only by the mechanical pressure regulator and the temperature of block 25 by a thermostatting unit with only ON/OFF action.

Referring to Figure 6, the temperature profile of the reactor contents is indicated by (A), the pressure profile is indicated by (B), and methane flow is indicated by (D).

In the present example it is observed that the oscillations of the operating parameters (P, T, gas flow) during the experiment are not negligible, and they, are much wider than in Example 1. In particular, it is apparent that the temperature oscillations due to the ON/OFF actions of thermostatting unit, cause slight oscillations of pressure of the order of ±0.05 bar that, although not detectable in curve (C), affect the flow (D) where the oscillation is clearly observable. Moreover, it is observed that the opening/closing hysteresis of the mechanical pressure regulator 14 also affects the profile of methane flow that shows two peaks. The presence of these two absorption peaks would lead one to speculate, wrongly, that gas hydrate formation proceeds in two steps, instead that in only one, instead they.correspond only to two opening actions of the mechanical pressure regulator that do not occur until a ΔP several bars is generated. In some cases, with different experimental conditions, it is possible to detect also three or more absorption peaks due to multiple openings or, in the worst cases, the ΔP that occurs in the first absorption stage is so high as to induce an overflow signal of the flow meter 16 when the opening of 14 takes place.

### Example 3

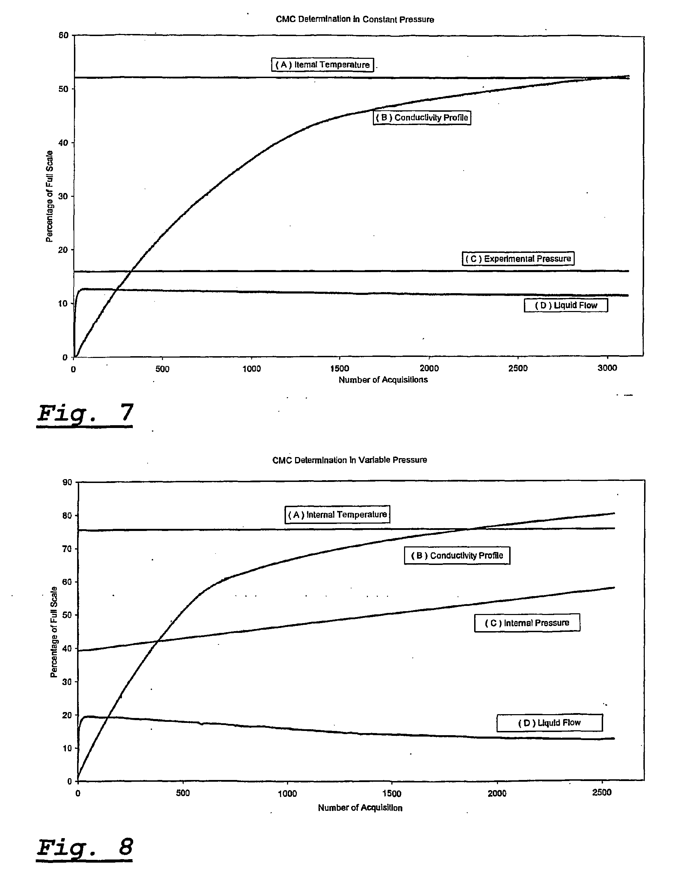

In Figure 7 is shown an example of data which can be recorded with the described apparatus in case of critical phenomena determination arising from changes in concentration under a constant pressure, in particular the example reports the data recorded for the determination of the critical micelle concentration (CMC) of a surfactant under a pressure of 40 bar and temperature of 20°C. The reactor 1 was charged with 100 ml of water, thermostatted to 20°C, curve (A), and stirred as in Example 1. After reservoir 30 was evacuated by a vacuum pump (not shown) through the valve V8, a surfactant solution of a proper concentration is introduced by suction into the reservoir through the valve V11. Subsequently the system is pressurized as a whole up to 40 bar with the desired gas by means of the pressure loading and holding line, curve (C), the obvious closing of valve V8 and opening of V7 and V9 ensures that the both reactor 1 and reservoir 30 reach the same pressure. The concentrated solution is transferred from reservoir 30 to the reactor 1 by opening the valves V10, 32 and V12 thus being added to the water already present into the reactor and giving rise to a variation of surfactant concentration from 0 to a maximum reachable concentration dependent on the volume of reactor and the concentration of the solution charged into the reservoir 30. This concentration is detected by the conductimetric measuring means 5, that records the conductimetric profile (B) or any other apparatuses capable to measure concentrations under pressure in a direct or indirect manner. Valve 32 controls the flow rate and the flow meter 33 measures its value, curve (D). All the signals relating to the curves (A), (B), (C), and (D) are measured by suitable instruments that transmit the signal in 4-20mA to the converter 21 and recorded on a file on the computer 22. As is apparent from curve (B), the conductimetric profile shows a sharp decrease of its positive slope, such a decrease being due to the occurrence of the target critical phenomenon under investigation, specifically the formation of micellar aggregates. The determination of the CMC value from the curves (B) and (D) will be described better in Example 5.

### Example 4 (comparative)

In Figure 8 it is reported an example of the data recordable with the described apparatus in the case of critical phenomena determinations arising from changes in concentration under a pressure without the use of the innovation of the apparatus for feeding liquid under constant pressure, but with the use of the usual technique of thrusting a liquid in a pressurized reservoir with a higher pressure. In particular the example reports data recorded for a CMC determination of a surfactant at a temperature of 25°C. The experimental procedure of thermostatting, curve (A), and charging of reactor 1 is carried out as in Example 3 except for the loading under pressure; in this case in fact the closing of valves V7 and V12 insulates from the pressure control system the line included between these two valves where reservoir 30 is fitted. Only reactor 1 is therefore brought to an initial pressure of ca. 30 bar. Subsequently the concentrated solution is charged in the reservoir 30 as for Example 3 by keeping closed valves V7 and V12. At this point, a pressurized gas source is connected to valve V8 which can be obtained by a plain mechanical pressure regulator connected to a pressurized tank generally of N₂ o He, and a pressure is set higher than the initial pressure P of reactor 1 by an amount which is dependent on the free volume of reactor 1 and the volume of liquid to be added, such an amount being sufficient to ensure a thrust of liquid to the reactor during the whole experiment, in this instance ca. 60 bar. Once reservoir 30 is charged and pressurized, the valve V12 is opened keeping the valve V7 closed, and the liquid pushed by the high pressure difference between reactor 1 and reservoir 30 will start to drop into the reactor 1 with a flow which can be adjusted by the valve 32 as in Example 3. As is apparent from Figure 8, the pressure inside the reactor, curve (C), does not remain constant as in Example 3 but increases because the system cannot compensate for the added volume of liquid that decreases the reactor volume available for the gas with a consequent increase of pressure from 30 bar to 38 bar during the course of the experiment reported in Figure 8. Moreover, as can be observed from curve (D), the flow of solution added to reactor 1 is not steady as that reported in Figure 7, but decreases faster, this being due to the fact that the ΔP between reservoir 30 and reactor 1 decreases during the addition because of the pressure increase inside the reactor 1. This could constitute a source of errors and require the' use of an expensive flow control system in order to obtain a steady flow as that reported in Figure 7.

### Example 5

Determination of critical micelle concentration (CMC) of sodium dodecylsulfate (SDS) under (A) ambient conditions; and (B, C) methane hydrate formation conditions by means of the apparatus according to the present invention.

(A) As described in Example 3, reactor 1 was charged with 100 ml of ultrapure water (obtained with Millipore Simplicity 185 ion-exchanger), thermostatted at 20°C and stirred as in Example 1. After having evacuated the reservoir 30 by a vacuum pump (not shown) through the valve V8, an aqueous solution of sodium dodecylsulfate (SDS) is introduced by suction into the reservoir 30 with a concentration such as to target the expected CMC value within the concentration range obtainable by adding a maximum volume of 100 ml of said solution to 100 ml of ultrapure water already present in the reactor. This in order to minimize the instrumental reading error; in this particular case of SDS, the expected CMC being 8.45 x10⁻³ M at 25°C, the molarity of the solution to be added will be 3.4 x 10⁻² M; therefore, the whole system is brought under a pressure of 1 bar with the desired gas by the pressure loading and holding line, the obvious closing of valve V8 and the opening of V7 and V9 allows both the reactor 1 and reservoir 30 to reach the same pressure. The SDS solution is transferred from reservoir 30 to the reactor 1 by opening valves V10, 32, V12. Valve 32 controls the flow and the flow meter 33 measures its value and sends the relevant signal to the converter 21 and computer 22.

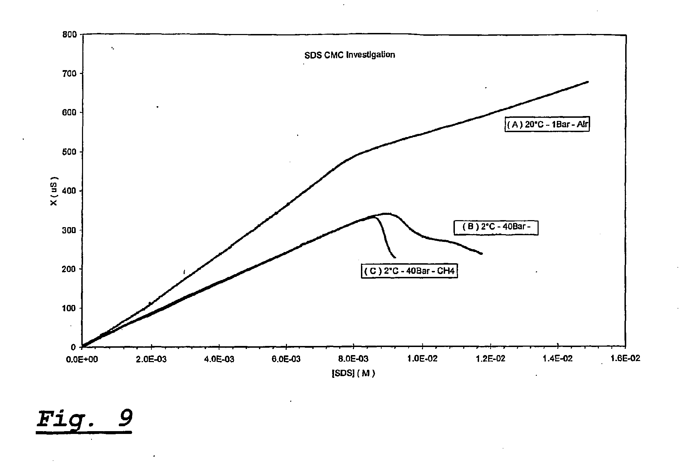

With the progress of the SDS aqueous solution addition to the reactor, the increase of electrical conductivity due to the increase of concentration of sodium and dodecylsulfate ions is detected by the conductimetric measurement means 5, through the conductimentric probe 5A. The conductivity signals are sent to the ADC 21, digitized and sent to the PC 22 to be stored and processed. For calculating the CMC, the recorded flow values as in the curve (D) of Figures 7 and 8 are integrated versus time in order to determine the volume of concentrated solution added with time; therefore, once the initial volume of water and the concentration of added solution are known, it is possible to determine the concentration variation values with time. As shown in Figure 9, the conductivity data detected by the conductimetric measurement means 5 plotted versus the values of concentration variation with time show the classical conductimetric profile of a surfactant with a sharp slope change corresponding to the minimum SDS concentration needed to form micellar aggregates, i.e., the CMC. The intersection between the two linear segments of the conductivity profile defines the CMC as determined by conductometry as is known in the art. In this case, a CMC value around 8.10 x 10⁻³ M at 20°C is obtained, which is comparable to data reported in the literature.

(B) e (C) By operating as above for (A), the reactor 1 is thermostatted to 2°C, then the whole apparatus is pressurized with methane (clathrate former) o nitrogen (non-clathrate former) at 40 bar and 2°C as in Example 1. The system is thus brought under conditions of methane hydrate formation and said induction time begins to elapse. Once the parameters T and P are stabilized, the addition of SDS aqueous solution starts as in (A) above, and the variation of conductivity is detected by conductometric measurement means 5. As is apparent from Figure 9, SDS is not able to reach a concentration suitable to form micellare aggregates in hydrate forming conditions, instead precipitation occurs by reaching its solubility limit, as indicated by the sharp drop of conductivity values above ca. 8 x 10⁻³ M (both under nitrogen and methane pressure), and by observation of precipitate through the camera 38.

In this manner, it is demonstrated that the surfactant SDS does not form micellar aggregates under hydrate forming conditions. This finding refutes the previous hypothesis (cf. claim 8 of US patent N. 6,389,820) according to which the promoting effect of surfactants (e.g., SDS) on clathrate hydrate formation is due to the formation of surfactant micelles.

## Claims

1. An apparatus for clathrate hydrate preparation from an aqueous solution in the presence of a gas, comprising a static reactor (1), means for gas loading and pressure controls (2), means of temperature control and adjustment (3), means of visual monitoring (6), means of data acquisition and control (7), **characterized in** further comprising means of detection of solute concentration (5), stirring means (10, 12) of the solution in said reactor (1) and means (4) of supplying a liquid to the reactor, said means (4) of liquid supply comprising a reservoir (30) that is located higher than said reactor (1) and connected to said reactor (1) by means of two lines (31A, 31B) forming a closed hydraulic circuit, said reservoir being partially filled with liquid reactants to define a top portion and a bottom portion respectively connected (31A, 31B) with said reactor (1) to receive a gas (31A) from said reactor and to supply liquid (31B) to said reactor at constant reactor pressure.

2. An apparatus according to claim 1, wherein on the liquid supply line (31B) to the reactor a liquid flow meter (33) and a regulation valve of said flow (32) are present.

3. An apparatus according to any previous claim, wherein said temperature control and adjustment means (3) comprises a Peltier element (3A).

4. An apparatus according to any previous claim, wherein said salute concentration measuring means comprises a means of conductimetric measurement.

5. An apparatus according to claim 4, wherein said means comprises a probe provided with a stainless steel jacket (33), gold electrodes (34, 34') and a resin (35) for fixing and insulating said electrodes to said jacket (33).

6. An apparatus according to any previous claim, wherein said gas loading means and pressure control (2) comprise a gas flow meter (16) and an electronically-actuated control valve (15).

7. An apparatus according to claim 6, wherein said gas loading and pressure control means (2) comprises a gas plenum chamber (18) connectable to said reactor in order to compensate for pressure variations.

8. An apparatus according to any previous claim, comprising lighting means inside the reactor.

9. An apparatus according to claim 8, wherein said internal lighting means comprises a cold light LED diode (37).

10. The use of an apparatus according to any previous claim for the measurement of clathrate hydrate preparation parameters.

11. The use according to claim 10, wherein said parameters are selected from induction time, formation time, occupancy rate and the like.

## Patentansprüche

1. Vorrichtung zur Herstellung von Clathrat Hydrat als eine wässrige Lösung bei Anwesenheit eines Gases, umfassend einen statischen Reaktor (1), Mittel zur Gasbeladung und Drucksteuerung (2), Mittel zur Temperatursteuerung und -einstellung (3), Mittel zur visuellen Überwachung (6), Mittel zur Datenerfassung und -steuerung (7), **dadurch gekennzeichnet, dass** die Vorrichtung weiterhin Mittel zur Erfassung der Konzentration (5) des gelösten Stoffs, Mittel zum Rühren (10, 12) der Lösung in dem Reaktor (1) und Mittel (4) zur Zufuhr von Flüssigkeit in den Reaktor umfasst, wobei die Mittel (4) zur Zufuhr von Flüssigkeit ein Reservoir (30) umfassen, das höher als der Reaktor (1) angeordnet ist, und mit dem Reaktor (1) mittels zweier Leitungen (31, 31b) verbunden sind, welche einen geschlossenen hydraulischen Kreislauf bilden, wobei das Reservoir teilweise mit flüssigen Reaktanten gefüllt ist, welche einen oberen Bereich und einen Bodenbereich definieren, die jeweils mit dem Reaktor (1) verbunden (31a, 31b) sind, um mit einem Gas (31a) aus dem Reaktor beschickt zu werden und eine Flüssigkeit (31 b) an den Reaktor bei konstantem Reaktordruck zu liefern.

2. Vorrichtung nach Anspruch 1, bei welcher in der Flüssigkeitszufuhrleitung (31 b) an den Reaktor eine Durchflussmesseinrichtung (33) und ein Durchflussregelventil (32) vorgesehen sind.

3. Vorrichtung nach einem der vorhergehenden Ansprüche, bei welcher die Mittel zur Temperatursteuerung und -einstellung (3) ein Peletier-Element (3a) umfassen.

4. Vorrichtung nach einem der vorhergehenden Ansprüche, bei welcher die Mittel zur Messung der Konzentration der gelösten Substanz Mittel zur Leitfähigkeitsmessung umfassen.

5. Vorrichtung nach Anspruch 4, bei welcher die Mittel einen Geber umfassen, der mit einer Edelstahlhülle (33), Goldelektroden (34, 34') und einem Harz (35) zur Befestigung und Isolierung der Elektroden an der Hülle (33) versehen ist.

6. Vorrichtung nach einem der vorhergehenden Ansprüche, bei welcher die Mittel zur Gasbeladung und Drucksteuerung (2) eine Gasdurchflussmesseinrichtung (16) und ein elektronisch betätigtes Steuerventil (15) umfassen.

7. Vorrichtung nach Anspruch 6, bei welcher die Mittel zur Gasbeladung und Drucksteuerung (2) eine Gassammelkammer (18) umfassen, die mit dem Reaktor zwecks Ausgleich von Druckschwankungen verbindbar ist.

8. Vorrichtung nach einem der vorhergehenden Ansprüche umfassend Beleuchtungsmittel im Inneren des Reaktors.

9. Vorrichtung nach Anspruch 8, bei welcher die Beleuchtungsmittel eine kalte LED-Diode (37) umfassen.

10. Verwendung einer Vorrichtung gemäß einem der vorstehenden Anspruche für die Messung von Clathrat Hydrat-Herstellungsparametern.

11. Verwendung nach Anspruch 10, bei welcher die Parameter aus einer Gruppe von Induktionszeit, Bildungszeit, Besetzungsrate und dergleichen ausgewählt werden.

## Revendications

1. Appareil pour la préparation d'un hydrate de clathrate à partir d'une solution aqueuse en présence d'un gaz, comprenant un réacteur statique (1), un moyen de chargement de gaz et de régulation de pression (2), un moyen de régulation et de réglage de température (3), un moyen de surveillance visuelle (6), un moyen d'acquisition et de commande de données (7), **caractérisé en ce qu'**il comprend en outre un moyen de détection de concentration de soluté (5), un moyen d'agitation (10, 12) de la solution dans ledit réacteur (1) et un moyen (4) pour fournir au liquide au réacteur, ledit moyen (4) de fourniture de liquide comprenant un réservoir (30) qui est situé plus haut que ledit réacteur (1) et raccordé audit réacteur (1) au moyen de deux lignes (31A, 31B) formant un circuit hydraulique fermé, ledit réservoir étant partiellement rempli avec des réactifs liquides pour définir une portion supérieure et une portion inférieure respectivement raccordées (31A, 31B) audit réacteur (1) pour recevoir un gaz (31A) dudit réacteur et pour fournir un liquide (31B) audit réacteur à une pression de réacteur constante.

2. Appareil selon la revendication 1, dans lequel sur la ligne d'alimentation en liquide (31B) vers le réacteur, un débitmètre de liquide (33) et une soupape de régulation dudit écoulement (32) sont présents.

3. Appareil selon l'une quelconque des revendications précédentes, dans lequel ledit moyen de régulation et de réglage de température (3) comprend un élément de Peltier (3A).

4. Appareil selon l'une quelconque des revendications précédentes, dans lequel ledit moyen de mesure de concentration de soluté comprend un moyen de mesure conductimétrique.

5. Appareil selon la revendication 4, dans lequel ledit moyen comprend une sonde pourvue d'une chemise en acier inoxydable (33), d'électrodes en or (34, 34') et d'une résine (35) pour fixer lesdites électrodes à ladite chemise (33) et les isoler de celles-ci.

6. Appareil selon l'une quelconque des revendications précédentes, dans lequel ledit moyen de chargement de gaz et de régulation de pression (2) comprend un débitmètre de gaz (16) et une soupape de commande à actionnement électronique (15).

7. Appareil selon la revendication 6, dans lequel ledit moyen de chargement de gaz et de régulation de pression (2) comprend une chambre de distribution de gaz (18) pouvant être raccordée audit réacteur afin de compenser des variations de pression.

8. Appareil selon l'une quelconque des revendications précédentes, comprenant un moyen d'éclairage à l'intérieur du réacteur.

9. Appareil selon la revendication 8, dans lequel ledit moyen d'éclairage interne comprend une diode DEL à lumière froide (37).

10. Utilisation d'un appareil selon l'une quelconque des revendications précédentes pour la mesure de paramètres de préparation d'hydrate de clathrate.

11. Utilisation selon la revendication 10, dans laquelle lesdits paramètres sont choisis parmi un temps d'induction, un temps de formation, un taux d'occupation et similaires.
